Europäisches Patentamt

European Patent Office

Office européen des brevets

(11) Publication number: **0 527 322 A1**

## EUROPEAN PATENT APPLICATION

(21) Application number: **92111231.4**

(22) Date of filing: **02.07.92**

(51) Int. Cl.⁵: **C08F 218/10**, C04B 24/26, C09D 131/02

(30) Priority: **09.08.91 US 742982**

(43) Date of publication of application:
**17.02.93 Bulletin 93/07**

(84) Designated Contracting States:
**BE DE FR GB IT NL**

(71) Applicant: **National Starch and Chemical Investment Holding Corporation**
**501 Silverside Road**
**Wilmington, Delaware 19809(US)**

(72) Inventor: **Mudge, Paul R.**
**23 Mulford Lane**
**Belle Mead, New Jersey 08502(US)**
Inventor: **Kukkala, Pravin K.**
**808 Lynwood Street**
**Raritan, New Jersey 08869(US)**
Inventor: **Walker, James L.**
**24 Horseshoe Road**
**Whitehouse Station, New Jersey 08889(US)**

(74) Representative: **Hagemann, Heinrich, Dr. et al**
**Patentanwälte Hagemann & Kehl Postfach 860329**
**W-8000 München 86 (DE)**

(54) Ethylene vinyl ester vinyl pivalate terpolymers.

(57) Water and alkali resistant emulsion binders comprising ethylene, a vinyl ester and vinyl pivalate. The binders are particularly useful in formulating paints and cement admixes.

Rank Xerox (UK) Business Services
(3.10/3.5x/3.0.1)

The present invention is directed to binder compositions which are prepared from ethylene, vinyl ester, vinyl pivalate terpolymer latices, preferably those latices stabilized by a protective colloid such as polyvinyl alcohol or hydroxyethylcellulose. The binders of the invention exhibit a high degree of alkaline hydrolysis resistance and are especially useful as latex binders in paints and in cement admixes.

Latices containing interpolymers of ethylene, vinyl esters and vinyl chloride are commonly used as binders for paint, as adhesives, as treating agents for paper and textiles and as admixtures to cement mortar, concrete or other cement-containing products providing improved strength and durability. However, their use is limited due to the difficulty in handling vinyl chloride as well as the tendency of the latices to degrade when exposed to heat and\or ultraviolet light. It has also been proposed to use latices containing ethylene and vinyl esters, however, these latices suffer from poor water and alkali resistance.

We have now found that the use of emulsion polymers (i.e., latices) prepared from ethylene, a vinyl ester and vinyl pivalate provide binders which overcome the toxicity problems as well as the water and alkali resistance problems of the materials of the prior art. In particular, it is preferred that the polymers of the present invention be prepared using batch polymerization techniques, and most preferably that they be prepared in the presence of a protective colloid such as polyvinyl alcohol.

As used herein, the term "batch" refers to a process whereby all the major monomers are charged to the reactor initially. This technique is in contrast to conventional slow-addition processes wherein water, emulsifying agents and optionally a minor portion of the monomers are initially charged in the reactor and the monomers then added gradually with the initiators over the course of the reaction.

Although vinyl acetate is the preferred vinyl ester monomer because of its availability, cost and known reactivity, other vinyl esters of $C_1$-$C_4$ carboxylic acids within the class defined are usable in particular vinyl formate, propionate, butyrate and isobutyrate. In preparing the latices, the vinyl pivalate component is used in an amount of 20 to 60% by weight, preferably at least 25%; the ethylene is present in an amount of 10 to 35% by weight, preferably at least 15% with the vinyl ester comprising the remainder of the composition.

In addition to the vinyl ester, ethylene and vinyl pivalate monomers, it may also be desirable to add other mono-ethylenically or polyethylenically unsaturated copolymerizable monomers known to react in free-radical initiated polymerizations in small amounts. In addition, certain copolymerizable monomers which assist in the stability of the copolymer emulsion, e.g., vinyl sulfonic acid, may also be used as latex stabilizers. These optionally present monomers, if employed, are added in very low amounts of from 0:1 to 2% by weight of the monomer mixture.

In accordance with the polymerization procedures utilized herein, the vinyl ester, ethylene and vinyl pivalate are polymerized in an aqueous medium under pressures not exceeding 100 atmospheres in the presence of a catalyst and at least one emulsifying agent, preferably a protective colloid, the aqueous system being maintained by a suitable buffering agent at a pH of 2 to 6, the catalyst being added incrementally or continuously. If a batch process is used, the monomers are suspended in water and are thoroughly agitated in the presence of ethylene under the working pressure to effect solution of the ethylene in the vinyl ester and vinyl pivalate up to the substantial limit of its solubility under the condition existing in the reaction zone, while the vinyl ester and vinyl pivalate are gradually heated to polymerization temperature. The homogenization period is followed by a polymerization period during which the catalyst, which consists of a main catalyst or initiator, and may include an activator, is added incrementally or continuously, the pressure being maintained substantially constant by application of a constant ethylene pressure if required.

Suitable as polymerization catalysts are the water-soluble free- radical formers generally used in emulsion polymerization, such as hydrogen peroxide, sodium persulfate, potassium persulfate and ammonium persulfate, as well as tert-butyl hydroperoxide, in amounts of between 0.01 and 3% by weight, preferably 0.01 and 1% by weight based on the total amount of the emulsion. They can be used alone or together with reducing agents such as sodium formaldehyde-sulfoxylate, iron-II-salts, sodium dithionite, sodium hydrogen sulfite, sodium sulfite, sodium thiosulfate, as redox catalysts in amounts of 0.01 to 3% by weight, preferably 0.01 to 1% by weight, based on the total amount of the emulsion. The free-radical formers can be charged in the aqueous emulsifier solution or be added during the polymerization in does.

The polymerization is carried out at a pH of between 2 and 7, preferably between 3 and 5. In order to maintain the pH range, it may be useful to work in the presence of customary buffer systems, for example, in the presence of alkali metal acetates, alkali metal carbonates or alkali metal phosphates. Polymerization regulators such as mercaptans, aldehydes, chloroform, methylene chloride and trichloroethylene, can also be added in some cases.

The polymerization reaction is carried out in the presence of a dispersing agent, preferably a protective colloid, which can also be used in conjunction with an emulsifying agent.

2

Suitable protective colloids include partially or completely saponified polyvinyl alcohol with degrees of hydrolysis between 75 and 100% and viscosities of between 3 and 48 cps, measured as a 4% aqueous solution at 20°C.; water-soluble cellulose ether derivatives, like hydroxyethyl cellulose, hydroxypropyl cellulose, methylcellulose or carboxymethyl cellulose; water-soluble starch ethers; polyacrylic acid or water-soluble polyacrylic acid copolymers with acrylamide and/or alkyl acrylates; poly-N-vinyl compounds of open-chained or cyclic carboxylic acid amides; and mixtures thereof.

The emulsifiers can be anionic, cationic or non-ionic surface-active compounds. Suitable anionic emulsifiers are, for example, alkyl sulfonates, alkylaryl sulfonates, alkyl sulfates, sulfates of hydroxyalkanols, alkyl and alkylaryl disulfonates, sulfonated fatty acids, sulfates and phosphates of polyethoxylated alkanols and alkylphenols, as well as esters of sulfosuccinic acid. Suitable cationic emulsifiers are, for example, alkyl quaternary ammonium salts, and alkyl quaternary phosphonium salts. Examples of suitable non-ionic emulsifiers are the addition products of 5 to 50 mols of ethylene oxide adducted to straight-chained and branch-chained alkanols with 6 to 22 carbon atoms, or alkylphenols, or higher fatty acids, or higher fatty acids amides, or primary and secondary higher alkyl amines; as well as block copolymers of propylene oxide with ethylene oxide and mixtures thereof. Preferably nonionic and/or anionic emulsifiers are used as emulsifying agents in amounts of 1 to 6% by weight of the polymerisate.

Latices in accordance with the invention are of particular interest as binders for lacquers, paints and varnishes due to their good film forming properties, their high pigment binding power, the lack of tackiness of the films, their alkali resistance and resistance to ultra violet light. Paints containing the latices of the invention normally contain co-solvents and pigments, and will commonly contain further constituents such as fillers, thickeners, dispersants, preservatives, corrosion inhibitors and anti foaming agents.

The latices may also be used as binders in conventional cementitious compositions. In general, these compositions comprise sand, a hydraulic cement, water and the latex, with the latex being employed either in its liquid form or as a dried powder. Other materials commonly used in the industry may also be present in such formulations. Representative of such optional materials are water-reducing agents or cement dispersing agents such as purified calcium lignin sulfonate or other purified ligno-sulfonates, salts of hydroxylated carboxylic acid, amine salts of modified hydroxylated carboxylic acids and similar synthetic plasticizing agents. The active solid ingredients of waste sulfite liquor (preferably dialyzed) may also be used. Also present may be antifoam agnets such as silicone, or long-chain alcohols including lauryl alcohol, stearyl alcohol and the like. Small amounts of antimycotics, such as sodium phenates or chloro phenates or other water- soluble mercurials are also used in such compositions.

A further embodiment of the invention includes a powder product formed by drying a latex defined above. Such a powder could be reconstituted into a latex as required, or incorporated into a product such as a mortar.

The latices of the invention and/or powder products formed therefrom may also find application in the field of paper and textile coatings, adhesives, polishes, sealants and putties. Moreover, the polymer emulsions of the invention exhibit good workability in cement and other hydraulic applications and do not significantly retard setting.

In the following examples, all parts are by weight unless otherwise indicated. The procedures utilized to prepare the binders produced in the examples are as follows:

EXAMPLE 1

This example illustrates the batch polymerisation process used in preparing alkali resistant latexes of the present invention.

To a 10 liter autoclave was charged 400 g (of a 25% w/w solution in water) of a low viscosity 88% hydrolyzed polyvinyl alcohol, 675 g (of a 10% w/w solution in water) of medium viscosity, 88% hydrolyzed polyvinyl alcohol, 30 g (of a 70% w/w solution in water) alkyl aryl polyethylene oxide (40 moles ethylene oxide), 3.5 g (of a 30% w/w solution in water) sodium salt of a carboxylated polyelectrolyte, 5 g (of a 1% w/w solution in water) ferrous sulfate solution, 2 g sodium formaldehyde sulfoxylate and 2300 g of water. The pH was adjusted to 4.2 using dilute phosphoric acid.

After purging with nitrogen, 2250 g of vinyl acetate and 750 g of vinyl pivalate were charged to the reactor. The reactor was then pressurized to 800 psi with ethylene and equilibrated at 50°C for 15 minutes.

The polymerization was then initiated by metering in a solution of 12 g of tertiary butyl hydroperoxide in 250 g of water and 10 g of sodium formaldehyde sulfoxylate in 250 g of water over 3.5 hours. The reaction temperature was then allowed to rise to 75-78°C over 1 hour and maintained at this temperature during the polymerization by means of external cooling or heating. At the end of the initiator slow additions, the product was transferred to an evacuated vessel (30 L) to remove residual ethylene from the system.

Using the general procedure described above, additional emulsions (Examples 2-12) were prepared varying the amounts and/or monomer compositions. The compositions of each emulsion are shown in Table 1. Three samples were prepared using vinyl versatate (VV9) in place of vinyl pivalate.

Each emulsion was then tested for alkali resistance using the following procedure:

a. 20 mil wet films were dried for 24 hours at controlled temperature and humidity.

b. The films were then dried at 120°F (⁻5-°C) for 48 hours.

c. One inch square sample films were cut and weighed to 4 decimal places.

d. The samples were then immersed in 200 ml of 5% NaOH solution for 7 days at 150°F (⁻65°C).

e. After 7 days, they were cooled to room temperature and transferred into 200 ml of distilled water for 2 hours.

f. Dried at 120°F for 24 hours,

g. The samples were reweighed to determine percent weight loss (or percent retention of weight). The results were recorded as % retention of weight of film.

TABLE 1

| Emulsion Compositions and Alkali Resistance by Batch Process (Terpolymers) | | | | | |
|---|---|---|---|---|---|
| Example NO. | Vinyl Acetate | Vinyl Pivalate | VV9 | Ethylene | Alkali Resistance |
| | Parts | Parts | Parts | PSI[a] | % |
| 1 | 75 | 25 | --- | 800 | 93.3 |
| 2 | 67 | 33 | --- | 800 | 94.4 |
| 3 | 50 | 50 | --- | 800 | 96.5 |
| 4 | 75 | 25 | --- | 700 | 87.0 |
| 5 | 66 | 34 | --- | 700 | 92.0 |
| 6 | 50 | 50 | --- | 700 | 96.0 |
| 7 | 85 | 15 | --- | 600 | 62.0 |
| 8 | 75 | 25 | --- | 600 | 87.7 |
| 9 | 66 | 34 | --- | 600 | 96.1 |
| 10 | 75 | --- | 25 | 800 | 93.1 |
| 11 | 67 | --- | 33 | 800 | 94.3 |
| 12 | 50 | --- | 50 | 800 | 94.5 |
| Control | 100 | --- | --- | 800 | 63.7 |

[a] A pressure of 700 psi equates to approximately 30% ethylene by weight in the final polymer as measured by glass transition temperature (Tg°C).

Based on the data from Table 1 when vinyl pivalate is used as an alternative monomer to VV9 in a batch polymerization it is as efficient as VV9 in introducing alkaline hydrolysis resistance to the final polymer as shown by the direct comparison of Examples 1, 2, 3 (vinyl pivalate) with 10, 11 and 12 (W9). Example 7 also shows that alkali resistance at 15% vinyl pivalate, at the lowest ethylene content, (600 psi = 25% wt ethylene in the final polymer) is not adequate enough and is only comparable to a high ethylene containing control EVA copolymer. Therefore, a minimum of about 20%, preferably 25%, vinyl pivalate is needed for optimum alkali resistance.

Table 1 further proves that satisfactory alkali resistance is generated at ethylene concentrations (as correlated to the equilibrium pressure) as low as 600 psi. It is also seen that at 50% level of vinyl pivalate, excellent alkali resistance is obtained.

EXAMPLE 2

This example illustrates the semi-batch polymerization process used in preparing alkali resistant latexes of the present invention.

To a 10 liter autoclave was charged 400 g (of a 25% w/w solution in water) of low viscosity, 88% hydrolyzed polyvinyl alcohol, 675 g (of a 10% w/w solution in water) of medium viscosity, 88% hydrolyzed polyvinyl alcohol, 30 g (of a 70% w/w solution in water) alkyl aryl polyethylene oxide (40 moles ethylene oxide), 3.5 g (of a 30% w/w solution in water) sodium salt of a carboxylated polyelectrolyte, 5 g (of a 1% w/w solution in water) ferrous sulfate solution, 2 g sodium formaldehyde sulfoxylate and 2300 g of water. The pH was adjusted to 4.2 with dilute phosphoric acid.

After purging with nitrogen, 1500 g of vinyl pivalate was charged to the reactor. The reactor was then pressurized to 700 psi with ethylene and equilibrated to 50°C for 15 minutes.

The polymerisation was then initiated by metering in a solution of 12 g of tertiary butyl hydroperoxide in 250 g of water and 10 g of sodium formaldehyde sulfoxylate in 250 g of water over 3.5 hours. On obtaining a two degree exotherm, 1500 g of vinyl acetate was concurrently added with the initiators over a period of 3 hours.

The reaction temperature was then allowed to rise to 75-78°C over 1 hour and maintained at this temperature during the polymerization by means of external cooling or heating. At the end of the initiator slow additions, the product was transferred to an evacuated vessel (30 L) to remove residual ethylene from the system.

Using the general procedure described above, additional emulsions were prepared varying the amounts and/or monomer compositions. (Examples 14-22). The emulsions were tested for alkali resistance as described above. Compositions and test results are shown in Table 2.

TABLE 2

| Emulsion Compositions and Alkali Resistance via Semi Batch Process [Terpolymers) | | | | | | |
|---|---|---|---|---|---|---|
| Example No. | Vinyl | Acetate | Vinyl | Pivalate | Ethylene (Pressure) | Alkali Resistance |
| | IC | SA | IC | SA | PSI | (%) |
| 13 | 50 | 25 | 0 | 25 | 700 | 66.5 |
| 14 | 50 | 16 | 0 | 34 | 700 | 61.0 |
| 15 | 50 | 0 | 0 | 50 | 700 | 74.1 |
| 16 | 25 | 25 | 25 | 25 | 700 | 91.1 |
| 17 | 25 | 50 | 25 | 0 | 700 | 71.0 |
| 18 | 16 | 50 | 34 | 0 | 700 | 70.0 |
| 19 | 0 | 50 | 50 | 0 | 700 | 76.0 |
| 20 | 25 | 50 | 25 | 0 | 800 | 76.0 |
| 21 | 16 | 50 | 34 | 0 | 800 | 88.0 |
| 22 | 0 | 50 | 50 | 0 | 800 | 85.0 |
| IC = initial charge SA = slow add | | | | | | |

Table 2 shows that when using semi-batch techniques to prepare the vinyl pivalate copolymers of the invention, alkali resistance is slightly reduced compared to those prepared via batch polymerization (e.g., Examples 1-9) especially at lower vinyl pivalate levels and that to compensate, higher ethylene content will be required when using this process instead of the preferred method. Here again, it is seen that excellent alkali resistance is obtained at 50% level of vinyl pivalate.

In general, both the batch process as well as the semi-batch process generates polymers that possess acceptable alkali resistance. It is observed that the process variations appear to have only a minor impact on the properties of the polymers.

One of the major factors that may change during the process (semi-batch) vis-a-vis the batch process is the total uptake of ethylene or even the rate of uptake of ethylene into the polymer backbone. This is evident from the rise in Tg of the polymers as the process changes from a batch to a semi-batch, indicating lower ethylene content or lower rate of ethylene uptake during the semi-batch process.

One interesting observation that is derived from the above process changes is that the amount of ethylene incorporated in the terpolymer appears to be related to the amount of vinyl pivalate present in the system during the reaction. For example, from batch process (Table 1), the Tg obtained show no appreciable increase even as the level of vinyl pivalate increases. Calculating in terms of ethylene content, there is a steady increase in ethylene content as the level of vinyl pivalate increases. This shows that ethylene may have a relatively higher solubility in vinyl pivalate. This effect could be the factor in the linking of the fact that alkali resistance is obtained only when both ethylene and vinyl pivalate are present, preferably in large quantities initially as in batch process operations.

EXAMPLE 3

For comparison purposes, emulsions were prepared without ethylene, utilizing the slow addition technique typically used:to prepare vinyl acetate copolymers.

To a 2 liter flask was charged 137.5 g (of a 10% w/w solution in water) of medium viscosity, 88% hydrolyzed polyvinyl alcohol, 0.25 g sodium acetate, 0.55 g (of a 1% w/w solution in water) ferrous sulfate solution, 0.25 g sodium formaldehyde sulfoxylate, 1.15 g of a coconut fatty acid defoamer, 0.5 of Colloid 681 F and 139 g of water. The pH was adjusted to 5.2 with phosphoric acid. After purging with nitrogen, 75 g of vinyl acetate was charged to the reactor.

The polymerization was then initiated at 60°C by metering in a solution of 0.92 g of ammonium persulfate and 0.165 g of ammonium hydroxide in 35 g of water and 0.45 g of sodium formaldehyde sulfoxylate in 35 g of water at a rate of 6 mL/hour. The reaction temperature was allowed to raise to 74°C. At this temperature, the catalyst solution addition rate was increased to 8 mL/hour.

Concurrently added with the initiator at 74°C over a period of 3 hours were 375 g of vinyl acetate and 50 g of vinyl pivalate, both monomers preemulsified with 0.875 g (of a 75% w/w solution in water) sodium salt of a dialkyl sulfosuccinate, 25 g (of a 10% w/w solution in water) of medium viscosity, 88% hydrolyzed polyvinyl alcohol and 128.75 g of water.

Similar emulsions were prepared and tested for alkali resistance. The results are shown in Table 3.

TABLE 3

| Emulsion Compositions of Vinyl Ester - Vinyl Acetate Copolymers | | | | | |
|---|---|---|---|---|---|
| Example No. | VA | VP | VV9 | VV10 | Alkali Resistance (q) |
| 23 | 90 | 10 | --- | --- | 0 |
| 24 | 80 | 20 | --- | --- | 0 |
| 25 | 70 | 30 | --- | --- | 0 |
| 26 | 60 | 40 | --- | --- | 0 |
| 27 | 90 | --- | 10 | --- | 0 |
| 28 | 80 | --- | 20 | --- | 47.6 |
| 29 | 70 | --- | 30 | --- | 52.0 |
| 30 | 60 | --- | 40 | --- | 66.0 |
| 31 | 90 | --- | --- | 10 | 0 |
| 32 | 80 | --- | --- | 20 | 0 |
| 33 | 70 | --- | --- | 30 | 58.1 |
| 34 | 60 | --- | --- | 40 | 61.5 |
| 35 | 100 | --- | --- | --- | 0 |

Table 3 shows that a copolymer of vinyl acetate and vinyl pivalate exhibits poor resistance to alkali in comparison to VV-9 or VV-10 (vinyl esters of tertiary carboxylic acids having 9 and 10 carbon atoms in the acid moiety, respectively). Thus, Table 3 shows the known and expected result of comparing vinyl pivalate with VV9 or VV10 in combination with vinyl acetate in that vinyl acetate-vinyl pivalate copolymers have zero resistance in alkaline hydrolysis while VV9 and VV10 provide adequate hydrolysis resistance in vinyl acetate copolymers made with these two monomers. However, on comparing Tables 1 and 2 with Table 3, the same vinyl pivalate latex prepared in the presence of ethylene performs satisfactorily, indicating that ethylene plays an important role. This phenomena becomes more evident by the fact that a latex film from a copolymer of ethylene and vinyl acetate exhibits unacceptable alkali resistance.

This known data makes the much improved alkali resistance observed via the introduction of vinyl pivalate into a vinyl acetate, vinyl pivalate polymer which also contains ethylene, unexpected in light of the known poor alkaline resistance of vinyl acetate-vinyl pivalate compounds and of ethylene-vinyl acetate copolymers respectively.

Hence, to obtain alkali resistance, both vinyl pivalate and ethylene have to be copolymerized. This phenomena of one monomer behaving as a supplement of the other monomer has not been previously observed and hence is considered unique to this case.

EXAMPLE 4

As a further summary of the results presented in Tables 1-3, Table 4 shows the physical properties of Emulsion Polymers 1-35 and the effect of the various polymerization procedures thereon.

TABLE 4
Emulsion Polymers Physical Properties

| SAMPLE # | SOLIDS (%) | pH | VISCOSITY (Cps) | INTRINSIC VISCOSITY | Tg (°C) |
|---|---|---|---|---|---|
| Table 1 | | | | | |
| 1 | 52.3 | 3.9 | 1840 | 0.748 | -16.1 |
| 2 | 52.5 | 3.9 | 2160 | 0.764 | -12.8 |
| 3 | 52.7 | 3.5 | 1020 | 0.653 | -16.1 |
| 4 | 50.2 | 3.0 | 1930 | 0.856 | -10.0 |
| 5 | 51.2 | 3.2 | 1990 | 0.776 | -8.1 |
| 6 | 49.4 | 3.1 | 1800 | 0.854 | -9.9 |
| 7 | 50.1 | 3.2 | 1375 | 1.076 | 1.4 |
| 8 | 49.1 | 2.9 | 950 | 0.984 | -0.2 |
| 9 | 50.5 | 3.2 | 1570 | 1.040 | -1.3 |
| 10 | 51.3 | 3.6 | 3000 | 0.564 | -18.7 |
| 11 | 49.8 | 3.6 | 3860 | 0.556 | -18.5 |
| 12 | 49.1 | 4.2 | 2095 | 0.541 | -16.7 |
| CONTROL | 55.3 | 4.7 | 1950 | 0.769 | -12.0 |
| Table 2 | | | | | |
| 13 | 49.6 | 3.3 | 2540 | 0.581 | -7.6 |
| 14 | 48.0 | 3.0 | 1340 | 0.533 | -6.0 |
| 15 | 49.4 | 2.8 | 1570 | 0.721 | -8.5 |
| 16 | 46.3 | 2.7 | 440 | 0.677 | -1.7 |
| 17 | 45.3 | 3.1 | 2900 | 0.474 | -12.3 |
| 18 | 45.5 | 2.9 | 1620 | 0.516 | -15.1 |
| 19 | 48.8 | 2.9 | 2820 | 0.489 | -11.7 |
| 20 | 51.6 | 2.9 | 4380 | 0.669 | -11.1 |
| 21 | 49.1 | 2.7 | 2800 | 0.354 | -23.5 |
| 22 | 49.1 | 2.9 | 1835 | 0.472 | -16.9 |
| Table 3 | | | | | |
| 23 | 49.9 | 3.1 | 6920 | 0.929 | 31.0 |
| 24 | 51.5 | 3.5 | 5880 | 0.805 | 43.6 |
| 25 | 51.3 | 2.6 | 3500 | 1.024 | 43.9 |
| 26 | 50.9 | 2.6 | 3460 | 1.045 | 51.4 |
| 27 | 50.1 | 2.7 | 2340 | 0.999 | 20.2 |
| 28 | 51.1 | 2.6 | 2830 | 1.107 | 21.5 |
| 29 | 50.0 | 2.5 | 9180 | 0.583 | 28.8 |
| 30 | 51.7 | 2.6 | 10780 | 0.989 | 32.2 |
| 31 | 51.2 | 4.7 | 980 | 0.497 | 29.2 |
| 32 | 50.1 | 6.2 | 1690 | 0.397 | 23.6 |
| 33 | 46.2 | 6.4 | 1575 | 0.419 | 13.3 |
| 34 | 50.5 | 3.0 | 997 | 0.700 | 11.7 |
| 35 | 50.2 | 2.7 | 2235 | 0.703 | 32.8 |
| | | | | | |

Table 4 shows that when vinyl pivalate was slow-added over a period of 3 hours (at 700 psi), the Tgs were marginally higher than the corresponding batch polymerized ones. However, when all the vinyl pivalate was in the initial charge (0% S/A - akin to batch polymerization) and the vinyl acetate was slow-added, Tg drastically decreased as the level of vinyl pivalate increased (which is the reverse of what is expected); i.e., higher concentrations of ethylene was incorporated into the polymer.

The batch process in comparison to the semi-batch process at the same ethylene pressures appears to generate polymers with marginally superior alkali resistance. This as mentioned earlier may be attributed to the larger uptake of ethylene during the batch process. It is also possible that the copolymerization sequence pattern of the monomers is more randomly or alternatively distributed in the batch process than in the semi-batch operations.

**Claims**

1.  A latex binder characterized by improved water and alkali resistance comprising an emulsion polymer with comprises 10 to 35% by weight ethylene, 20 to 60% by weight vinyl pivalate, the remainder, to 100%, comprising a vinyl ester of a $C_1$-$C_4$ carboxylic acid.

2.  The binder of Claim 1 characterized in that a 20 mil wet film thereof, after drying for 48 hours at 120°F. and immersion in 200 ml of 5% NaOH solution for 7 days at 150°F and drying at 120°F for 24 hours, retains at least 80% of its original weight.

3.  The binder of Claim 1 wherein the emulsion polymer is stabilized by a protective colloid and is prepared using batch or semi-batch polymerization techniques.

4.  The binder of Claim 3 wherein the protective colloid is polyvinyl alcohol or hydroxyethyl cellulose.

5.  The binder of Claim 1 wherein the vinyl pivalate is present in an amount of at least 25% by weight.

6.  The binder of Claim 6 wherein the vinyl pivalate is present in an amount of at least 50% by weight.

7.  A paint composition comprising pigment, co-solvent the emulsion polymer of Claim 1, and optionally at least one member selected from the group consisting of fillers, thickeners, dispersants, preservatives, corrosion inhibitors and anti-foaming agents.

8.  A powder product formed by drying the latex of Claim 1.

9.  A cementitious composition comprising sand, a hydraulic cement, water the binder of Claim 1, and optionally at least one member selected from the group consisting of water-reducing agents, cement dispersing agents, antimycotics and anti-foaming agents.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 086 036 (SHELL INTERNATIONAL RESEARCH MAATSCHAPPIJ) <br> * claim 1 * <br> * page 2, column 2, line 109 - page 2, column 2, line 110 * <br> * page 3, column 1, line 41 - page 3, column 1, line 45 * <br> * page 4, column 2, line 86 - page 4, column 2, line 90 * <br> * examples 1-16 * <br> --- | 1-8 | C08F218/10 <br> C04B24/26 <br> C09D131/02 |
| X | GB-A-1 569 637 (HOECHST) <br> * claims 1,13 * <br><br> ----- | 1-9 | |
| | | | TECHNICAL FIELDS SEARCHED (Int. Cl.5) <br><br> C08F <br> C04B |

The present search report has been drawn up for all claims

| Place of search | Date of completion of the search | Examiner |
|---|---|---|
| THE HAGUE | 13 NOVEMBER 1992 | CAUWENBERG C.L. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)